# EUROPEAN PATENT SPECIFICATION

(11) **EP 4 628 663 B1**
(45) Date of publication and mention of the grant of the patent: **02.12.2026**
(21) Application number: 25165142.8
(22) Date of filing: 20.03.2025
(51) Int. Cl.: E03C 1/04, F16K 11/078, F16K 31/60

(54) **SINGLE-LEVER MIXER TAP**
EINHEBELMISCHERHAHN
ROBINET MÉLANGEUR À LEVIER UNIQUE

(30) Priority: 04.04.2024 IT 202400007525
(43) Date of publication of application: 08.10.2025
(73) Proprietor: Fima Carlo Frattini S.P.A., 28010 Briga Novarese (Novara) (IT)
(72) Inventor: VERCELLI, Davide, 13019 Varallo (VC) (IT)
(74) Representative: Petruzziello, Aldo

(56) References cited:
- EP-A1- 0 426 587
- EP-B1- 2 957 682
- US-A1- 2008 128 035

## Description

The present invention relates to a single-lever mixer tap.

### Background of the invention

Mixer taps, or simply mixers, single lever, whether for washbasins, bidets, or the like, in their essential parts, comprise a body, in which is housed a cartridge, which regulates water flow and temperature; a control member, which allows these functions to be controlled; and an aerator, through which water is dispensed.

The cartridge is normally made with two ceramic discs: an upper and a lower disc. On the lower disc there are two inlet holes for cold and hot water and one outlet hole, while on the upper disc there is a single larger hole which, according to the position of the disc, can be placed in communication with one or both of the inlet holes, as well as with the outlet hole, allowing mixing and outflow of water.

The control member of such mixers normally consists of a lever projecting radially from the body of the tap, which can be operated upwards and downwards to open and close the water flow, respectively, and rotated in one direction or the other to adjust the temperature, mixing the incoming flows.

In addition to being unsightly for some types of furnishings, the presence of such a lever can sometimes be a hindrance to the user.

In addition, actuation of the lever is not always easy and intuitive.

EP 2957682 B1 describes a single-lever mixer tap, comprising a single-body handle that can be rotated and moved axially upwards and downwards with respect to the body of the tap.

Other single-lever mixer tap are disclosed in EP0426587A1 and US2008/128035A1.

### Summary of the invention

The object of the invention is to eliminate the above illustrated disadvantages of single-lever mixers provided with a control lever.

Specifically, one object of the present invention is to provide a mixer tap in which the control member is entirely contained within the transverse profile of the body of the tap.

Another object of the invention is to provide such a mixer that has a compact structure and whose control member can be actuated simply and intuitively.

A further object of the invention is to provide a mixer with such a control member that is simple and inexpensive to make.

These and other objects are achieved by the mixer tap according to the invention, which has the features listed in the appended independent claim 1.

Advantageous embodiments of the invention are disclosed by the dependent claims.

Substantially, the mixer tap according to the invention comprises:
- a tubular body with a substantially vertical axis,
- a cup, housed in the tubular body, provided with two hot and cold water inlet holes and a mixed water outlet hole, in communication with a spout,
- a mixing cartridge arranged in the cup, provided with two inlet holes for hot and cold water and one outlet hole for mixed water, in communication with the corresponding inlet and outlet holes in the cup,
- a lever protruding above from the cartridge, which can be actuated in an oscillatory and rotary direction by means of a handle for opening/closing the flow and mixing, respectively,
wherein said handle constitutes an extension of said tubular body and comprises a lower handle body and an upper handle body, coupled together along opposing inclined surfaces, so that they can rotate together and with the possibility of linear sliding, from top to bottom and vice versa, along said inclined surfaces, of the upper handle body with respect to the lower handle body.

### Brief description of the drawings

Further features of the invention will be made clearer by the detailed description that follows, referring to a purely illustrative, and therefore non-limiting, embodiment illustrated in the accompanying drawings, in which:
Fig. 1 is a blown-up view, in axonometry from above, of a single-lever tap according to the invention, also showing the mounting kit and water supply hoses;
Fig. 2 is an axonometric blown-up view from below of the cartridge and its control mechanism shown in Fig. 1;
Fig. 3A is a front view of the assembled tap;
Fig. 3B is a view from below of the tap in Fig. 3A;
Fig. 4A is a sectional view taken along plane A-A of Fig. 3A;
Fig. 4B is a sectional view taken along plane B-B of Fig. 3B;
Fig. 5 is a sectional view like the one in Fig. 4A, showing only the tap body and the water dispensing spout;
Fig. 6A is an enlarged sectional view like the one in Fig. 4A, showing the upper part of the tap, as far as the level of the cartridge, in the closed condition;
Fig. 6B is a sectional view like the one in Fig. 6A, with the tap in the open condition;
Fig. 7 is a view from below of the alignment shell mounted on the lower handle body for actuation of the lever of the cartridge;
Figs. 8A, 8B are views of the tap in the open condition, showing two different temperature settings.

### Detailed description of the invention

With reference to the accompanying drawings, the single-lever mixer tap according to the invention will now be described in more detail.

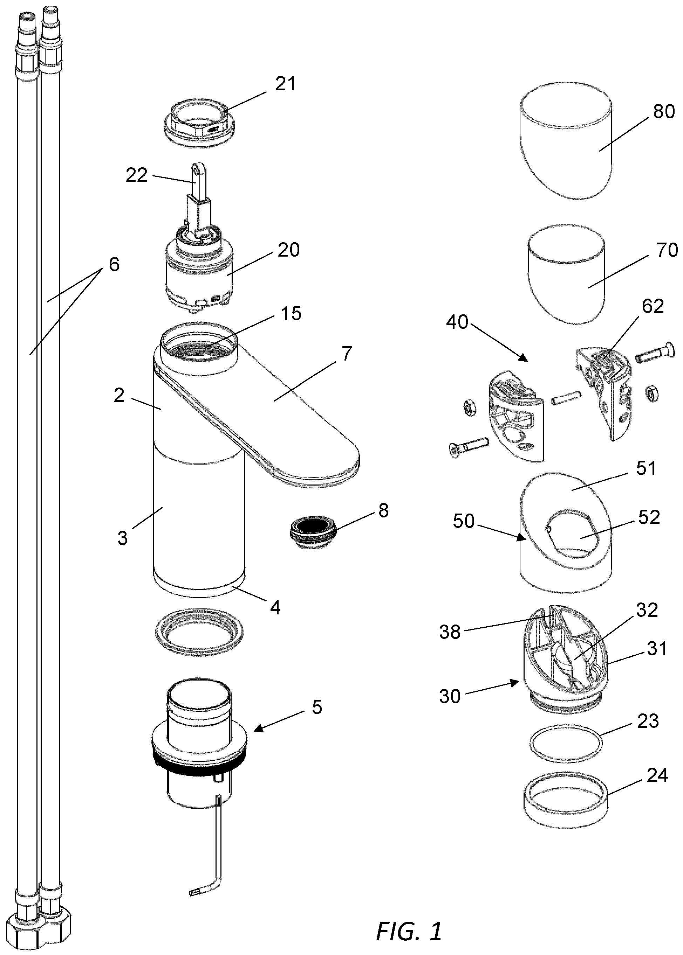

Fig. 1 shows, in a blown-up axonometric view from above, the various components of the tap according to the invention, denoted overall by reference numeral 1, which are to be assembled from top to bottom, superimposing the right-hand components on the left-hand ones.

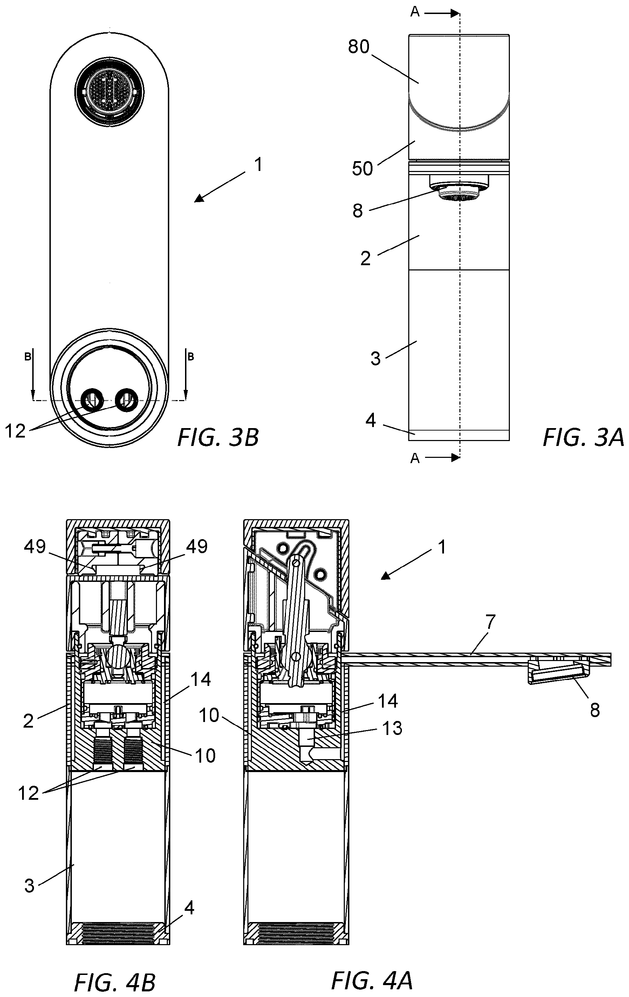

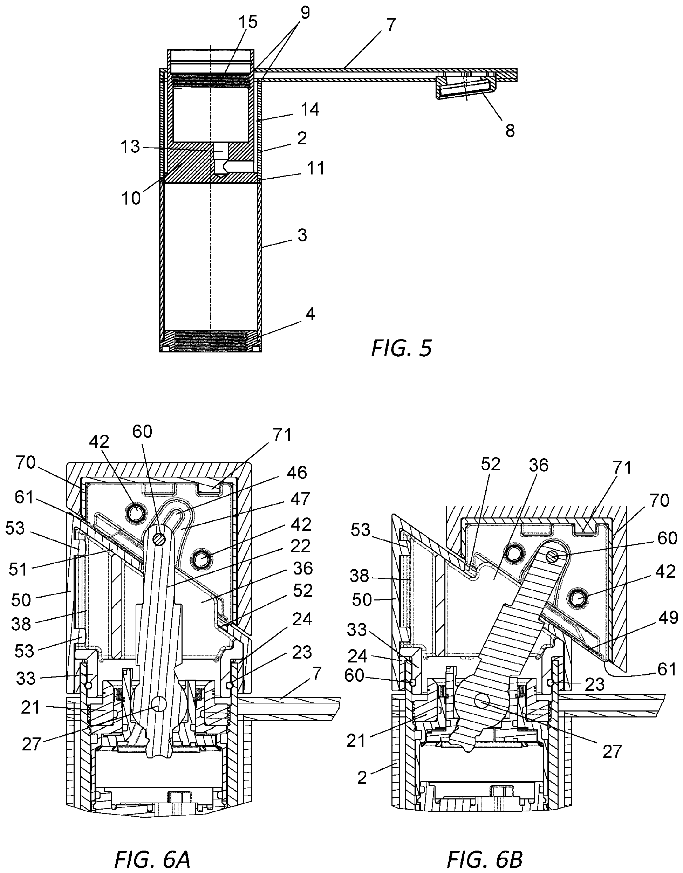

It substantially comprises a main tubular body 2, with a substantially vertical axis, in which is arranged a cup 10 (see in particular Fig. 5), secured by welding 11, intended to house a cartridge 20. Below the main body 2 is optionally welded a tubular extension 3 that determines the height of the tap model, at the lower end of which is welded a threaded ring 4 for the engaging of a fastening kit 5, shown only in Fig.1, in which are also shown two flexible hoses 6 for hot and cold water supply, connected to two corresponding inlet holes 12 provided in the cup 10, seen in Figs. 3B and 4B.

Fig. 5 also shows the spout 7 with aerator 8, attached by welds 9 to the main body 2 and to the cup 10.

There is also a non-through hole 13 in the cup 10, communicating with a gap 14 between the cup and the main body, which in turn communicates with the spout 7.

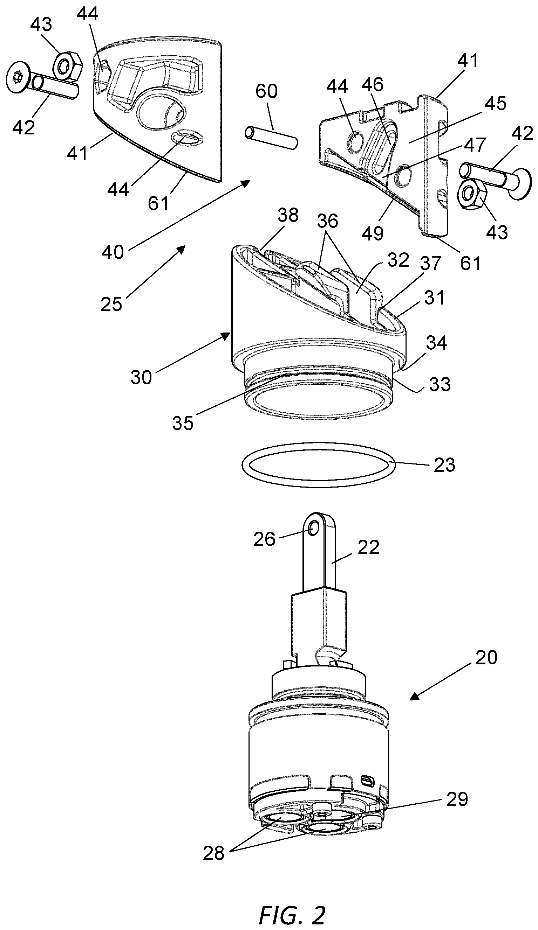

The cartridge 20, in a manner in itself known, has two inlet holes 28 for hot and cold water and one outlet hole 29 for mixed water (Fig. 2), in communication with the corresponding inlet holes 12 and outlet holes 13 in cup 10.

Cartridge 20 is locked in the cup 10 by means of a cartridge press ring nut 21, which screws into an internal thread 15 provided in proximity to the mouth of cup 10.

A lever 22 protrudes above from the cartridge 20, which is actuated, in a manner in itself known, in an oscillatory and rotary direction, for the opening/closing of the flow and mixing, respectively.

The actuation of lever 22 takes place by means of a handle 25 (seen more clearly in Fig. 5), which constitutes a specific object of the invention, comprising a lower handle body 30 and an upper handle body 40, coupled one to the other along an inclined surface, with rotary constraint and the possibility of linear sliding, from top to bottom and vice versa, of the upper handle body 40 with respect to the lower handle body 30, as will be described in greater detail here below.

The lower handle body 30 is made in one piece, preferably in plastic material, and is substantially cylindrical in shape, with inclined upper surface 31 bevel cut, and an internal cavity 32 for the passage of the lever 22, which is allowed only oscillatory movement with respect to the body 30.

The lower handle body 30 has below a cylindrical shank 33 of smaller diameter, determining with the body 30 a shoulder 34.

The shank 33 is housed in the mouth of cup 10 and has an annular groove 35 intended to partially accommodate a Teflon ring 23, with an anti-friction and anti-extraction function, which allows body 30 to rotate frictionlessly in cup 10 and not withdraw during use.

A second Teflon ring 44, with an anti-friction function, in the form of a clamp, is arranged externally to the mouth of the cup 10 and has an inner flap resting on the edge of the cup, on which the aforementioned shoulder 34 of the lower handle body 30 rests (see in particular Figs 6A, 6B).

Protruding from the inclined surface 31 of the body 30 are a pair of fins 36, bordering said internal cavity 32 for the passage of the lever 22 of the cartridge 20, and externally determining a pair of linear guides 37 for the sliding engagement of the upper handle body 40, to be described here below.

A cover 50 is arranged on the lower handle body 30, having mainly an aesthetic function, but also serving to facilitate the sliding of the upper handle body 40.

The cover 50 reproduces the shape of the body 30 and has, on the upper inclined surface 51, an opening 52 for the passage of said fins 36.

At least one overhang 53 (two in the example shown) is provided internally to the side wall of cover 50, suitable for being inserted in a vertical slot 38 provided in body 30 to constrain the cover 50 in rotation (see in particular Figs. 2, 6A, 6B).

Cover 50 constitutes an upward extension of the main body 2 of the tap and encloses within it the mouth of cup 10.

The upper handle body 40 is made of two specular components 41, which are joined by means of a pair of screws 42, passing in corresponding holes 24 provided therein and secured by respective nuts 43.

Naturally, other fastening systems can be provided, such as for example simple joints between the two components.

The inner surfaces 45 of the two components 41 are substantially flat and are arranged in contact after assembly.

A guide rail 46 is formed in each flat surface, suitable for slidingly receiving a respective end of a pin 60, which passes in a hole 26 provided at the end of the lever 22 of the cartridge 20 to restrain this lever to the movement of the handle body 40.

A bas-relief template 47 is provided around the rail 46, which accommodates a half-thickness of the lever 22 and allows oscillatory movement thereof around its fulcrum pin 27 during actuation of the handle to open and close the water flow.

Each component 41 of the assembled upper handle body is arranged, with its lower surface inclined, on the corresponding upper surface 51, inclined in the opposite direction, of the cover 50 of the lower handle body 30, and has a groove 48 below, suitable for accommodating a corresponding wing 36 of the lower handle body, protruding from the cover 50.

Each groove 48 is bordered by a track 49 (also seen in the section of Fig. 4B) that engages slidingly in a corresponding linear guide 37 provided at the base of the wing 36, so that the upper handle body 40 remains constrained to the lower handle body 30 with the possibility of sliding between the aforementioned inclined planes.

An anti-friction ring 61 is integrated on the lower edge of the components 41 of the upper handle body 40, which allows smooth sliding on the cover 50, without ruining the surface finish of the product and insulates the interior from external contamination.

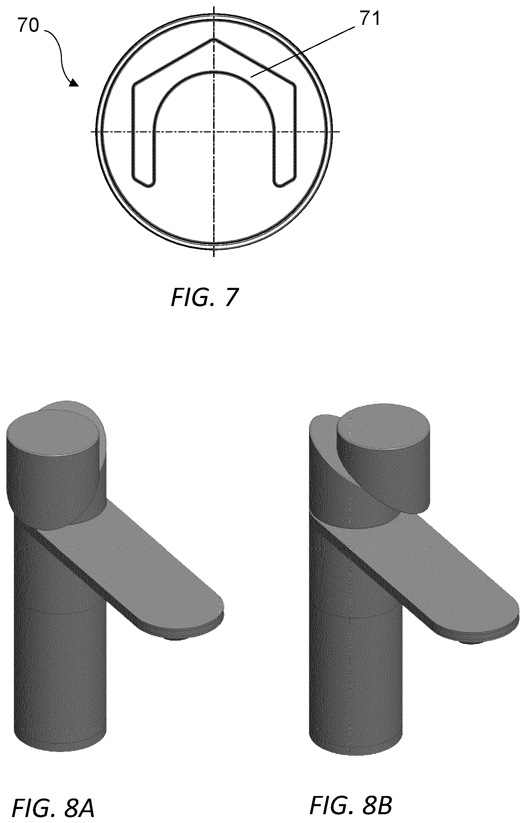

Grooves 62 are provided on the upper surface of the two components 41 which, in the coupling of these components, determine a substantially pentagonal conformation without the base, with which a ribbing of the same shape 71 (Fig. 7), provided internally on the back wall of an alignment shell 70, which is arranged on the upper handle body 40, goes to engage.

An aesthetic cover 80 in satin-finish steel is finally applied on the shell 70.

Other undercuts are provided on the two components 41 of the upper handle body 40, above all for lightening.

Figs. 8A and 8B schematically show the functionality of the tap handle according to the invention, with which it is sufficient to exert pressure downwards on the cover 80 of the upper handle body 40, to cause sliding of the same on the lower handle body 30, and then an oscillation of the lever 22 with opening of the water flow in the flow rate required.

A rotation, in one direction or the other, of the upper cover 80 causes the rotation of the entire handle 25, and therefore of the lever 22 with the internal mechanism of the cartridge causing the mixing of the water.

Closure of the flow is achieved by pushing the upper handle body 40 upwards.

The opening of the flow with an action on the control handle from top to bottom is much more practical and intuitive with respect to the lever actuations that normally occur from bottom to top.

Incidentally, this required the mounting of the cartridge rotated through 180° with respect to normal uses of a mixing cartridge.

From what has been disclosed, the advantages appear clear of the single-lever mixer tap according to the invention, whose handle with downward push actuation control is entirely contained within the transverse profile of the tap body, eliminating any hindrance to the user.

Naturally, the invention is not limited to the particular embodiment previously described and illustrated in the accompanying drawings, but numerous detailed changes may be made thereto within the reach of the person skilled in the art, without thereby departing from the scope of the invention as defined in the appended claims.

## Claims

1. Single-lever mixer tap (1), comprising:
- a tubular body (2) with a substantially vertical axis
- a cup (10), housed in the tubular body (2), provided with two inlet holes (12) for hot and cold water and one outlet hole for mixed water, in communication with a spout (7),
- a mixing cartridge (20) arranged in the cup (10), provided with two inlet holes (28) for hot and cold water and one outlet hole (29) for mixed water, in communication with the corresponding inlet (12) and outlet (13) holes in the cup (10),
- a lever (22) protruding above from the cartridge (20), which can be actuated in an oscillatory and rotary direction by means of a handle (25) for the opening/closing of the flow and mixing, respectively, said handle (25) constituting an extension of said tubular body (2),
**characterised in that** said handle (25) comprises a lower handle body (30) and an upper handle body (40), coupled together along opposing inclined surfaces, so that they can rotate together and with the possibility of linear sliding, from top to bottom and vice versa, along said inclined surfaces, of the upper handle body (40) with respect to the lower handle body (30).

2. Tap according to claim **1, characterised in that** the lower handle body (30) has an internal cavity (32) for the passage of said lever (22), the protruding end whereof is constrained to the upper handle body (40).

3. Tap according to claim 2, **characterised in that** from the upper inclined surface of the lower handle body (30) protrude a pair of fins (36), bordering said internal cavity (32) and determining externally a pair of linear guides (37) for the sliding engagement of corresponding rails (49) provided on the sides of a groove (48) formed in the lower inclined surface of the upper handle body (40), suitable for accommodating said fins (36), so that the upper handle body (40) remains constrained to the lower handle body (30) with the possibility of sliding between said inclined surfaces.

4. Tap according to claim 2 or 3, **characterised in that** said upper handle body (40) is made of two specular components (41) with opposing flat contact surfaces, in each of which a guide rail (46) is formed, suitable for slidingly receiving a respective end of a pin (60), which passes in a hole (26) provided at the end of the lever (22) of the cartridge (20) to constrain said lever to the movement of the upper handle body (40).

5. Tap according to claim 4, **characterised in that** around said guide rails (46) for said pin (60) respective bas-relief templates (47) are provided, which accommodate the thickness of the lever (22) and allow oscillatory movement thereof around its fulcrum pin (27) during actuation of the handle to open and close the flow of water.

6. Tap according to any one of claims 3 to 5, **characterised in that** on the lower handle body (30) is arranged a cover (50) that reproduces the shape thereof and has an inclined upper surface (51), on which the upper handle body (40) slides, on said inclined surface (41) being provided an opening (52) for the passage of said fins (36).

7. Tap according to claim 6, **characterised in that** internally to the side wall of the cover (50) there is provided at least one overhang (53) designed to fit into a vertical slot (38) provided in the lower handle body (30) to constrain the cover (50) in rotation.

8. Tap according to any one of claims 4 to 7, **characterised in that** on the upper handle body (40) is arranged an alignment shell (70), internally to the bottom wall of which is provided a shaped ribbing (71) that goes to engage with corresponding grooves (62) provided on the upper surface of the two components (41).

9. Tap according to claim 8, **characterised in that** an aesthetic cover (80) is applied on said shell (70).

10. Tap according to any one of claims 6 to 9, **characterised in that** an anti-friction ring (61) is integrated on the lower edge of said components (41) of the upper handle body (40), which allows smooth sliding on said cover (50)

## Patentansprüche

1. Einhebelmischbatterie (1), umfassend:
- einen rohrförmigen Körper (2) mit einer im Wesentlichen vertikalen Achse,
- einen Becher (10), der in dem rohrförmigen Körper (2) aufgenommen ist und mit zwei Einlassöffnungen (12) für Warm- und Kaltwasser und einer Auslassöffnung für Mischwasser versehen ist, die mit einem Auslauf (7) in Verbindung steht,
- eine Mischkartusche (20), die in dem Becher (10) angeordnet ist und mit zwei Einlassöffnungen (28) für Warm- und Kaltwasser und einer Auslassöffnung (29) für Mischwasser versehen ist, die mit den entsprechenden Einlass- (12) und Auslassöffnungen (13) des Bechers (10) in Verbindung stehen,
- einen oben aus der Kartusche (20) herausragenden Hebel (22), der mittels eines Griffs (25) in einer Schwenk- und Drehrichtung zum Öffnen/Schließen des Durchflusses bzw. zum Mischen betätigbar ist, wobei der Griff (25) eine Verlängerung des rohrförmigen Körpers (2) bildet,
**dadurch gekennzeichnet, dass** der Griff (25) einen unteren Griffkörper (30) und einen oberen Griffkörper (40) umfasst, die entlang einander gegenüberliegender geneigter Flächen derart miteinander gekoppelt sind, dass sie gemeinsam drehbar sind und der obere Griffkörper (40) gegenüber dem unteren Griffkörper (30) entlang der geneigten Flächen von oben nach unten und umgekehrt linear gleiten kann.

2. Mischbatterie nach Anspruch 1, **dadurch gekennzeichnet, dass** der untere Griffkörper (30) einen inneren Hohlraum (32) für den Durchgang des Hebels (22) aufweist, dessen vorstehendes Ende mit dem oberen Griffkörper (40) zwangsgekoppelt ist.

3. Mischbatterie nach Anspruch 2, **dadurch gekennzeichnet, dass** aus der oberen geneigten Fläche des unteren Griffkörpers (30) ein Paar Stege (36) herausragt, die den inneren Hohlraum (32) begrenzen und außen ein Paar Linearführungen (37) für den gleitenden Eingriff entsprechender Schienen (49) bilden, die an den Seiten einer in der unteren geneigten Fläche des oberen Griffkörpers (40) ausgebildeten, zur Aufnahme der Stege (36) geeigneten Nut (48) vorgesehen sind, so dass der obere Griffkörper (40) mit dem unteren Griffkörper (30) verbunden bleibt und zwischen den geneigten Flächen gleiten kann.

4. Mischbatterie nach Anspruch 2 oder 3, **dadurch gekennzeichnet, dass** der obere Griffkörper (40) aus zwei spiegelbildlichen Bauteilen (41) mit einander gegenüberliegenden ebenen Kontaktflächen besteht, in denen jeweils eine Führungsschiene (46) ausgebildet ist, die geeignet ist, ein jeweiliges Ende eines Stifts (60) gleitend aufzunehmen, der durch eine am Ende des Hebels (22) der Kartusche (20) vorgesehene Bohrung (26) verläuft, um den Hebel an die Bewegung des oberen Griffkörpers (40) zu binden.

5. Mischbatterie nach Anspruch 4, **dadurch gekennzeichnet, dass** um die Führungsschienen (46) für den Stift (60) jeweilige Flachreliefvertiefungen (47) vorgesehen sind, welche die Dicke des Hebels (22) aufnehmen und dessen Schwenkbewegung um seinen Drehzapfen (27) bei der Betätigung des Griffs zum Öffnen und Schließen des Wasserdurchflusses ermöglichen.

6. Mischbatterie nach einem der Ansprüche 3 bis 5, **dadurch gekennzeichnet, dass** auf dem unteren Griffkörper (30) eine Abdeckung (50) angeordnet ist, die dessen Form nachbildet und eine geneigte obere Fläche (51) aufweist, auf welcher der obere Griffkörper (40) gleitet, wobei in der geneigten Fläche (41) eine Öffnung (52) für den Durchgang der Stege (36) vorgesehen ist.

7. Mischbatterie nach Anspruch 6, **dadurch gekennzeichnet, dass** innen an der Seitenwand der Abdeckung (50) mindestens ein Vorsprung (53) vorgesehen ist, der dazu ausgelegt ist, in einen im unteren Griffkörper (30) vorgesehenen vertikalen Schlitz (38) einzugreifen, um die Abdeckung (50) drehfest festzulegen.

8. Mischbatterie nach einem der Ansprüche 4 bis 7, **dadurch gekennzeichnet, dass** auf dem oberen Griffkörper (40) eine Ausrichtschale (70) angeordnet ist, an deren Bodenwand innen eine Formrippe (71) vorgesehen ist, die mit entsprechenden, an der Oberseite der beiden Bauteile (41) vorgesehenen Nuten (62) in Eingriff kommt.

9. Mischbatterie nach Anspruch 8, **dadurch gekennzeichnet, dass** auf der Schale (70) eine Zierabdeckung (80) angebracht ist.

10. Mischbatterie nach einem der Ansprüche 6 bis 9, **dadurch gekennzeichnet, dass** an dem unteren Rand der Bauteile (41) des oberen Griffkörpers (40) ein Antifriktionsring (61) integriert ist, der ein leichtes Gleiten auf der Abdeckung (50) ermöglicht.

## Revendications

1. Robinet mitigeur monocommande (1), comprenant :
- un corps tubulaire (2) présentant un axe sensiblement vertical,
- un godet (10), logé dans le corps tubulaire (2), pourvue de deux orifices (12) d'entrée pour l'eau chaude et l'eau froide et d'un orifice de sortie pour l'eau mélange, en communication avec un bec (7),
- une cartouche de mélange (20) disposée dans le godet (10), pourvue de deux orifices d'entrée (28) pour l'eau chaude et l'eau froide et d'un orifice de sortie (29) pour l'eau mélange, en communication avec les orifices d'entrée (12) et de sortie (13) correspondants du godet (10),
- un levier (22) faisant saillie vers le haut à partir de la cartouche (20), qui peut être actionné dans une direction oscillatoire et rotative au moyen d'une poignée (25) pour l'ouverture/fermeture du débit et le mélange, respectivement, ladite poignée (25) constituant un prolongement dudit corps tubulaire (2),
**caractérisé en ce que** ladite poignée (25) comprend un corps de poignée inférieur (30) et un corps de poignée supérieur (40), accouplés l'un à l'autre le long de surfaces inclinées opposées, de sorte qu'ils peuvent tourner ensemble et avec la possibilité de coulissement linéaire, de haut en bas et vice-versa, le long desdites surfaces inclinées, du corps de poignée supérieur (40) par rapport au corps de poignée inférieur (30).

2. Robinet selon la revendication 1, **caractérisé en ce que** le corps de poignée inférieur (30) présente une cavité interne (32) pour le passage dudit levier (22), dont l'extrémité saillante est fixée au corps de poignée supérieur (40).

3. Robinet selon la revendication 2, **caractérisé en ce que**, depuis la surface inclinée supérieure du corps de poignée inférieur (30), font saillie une paire d'ailettes (36), bordant ladite cavité interne (32) et définissant extérieurement une paire de guides linéaires (37) pour l'engagement coulissant de rails (49) correspondants prévus sur les côtés d'une rainure (48) formée dans la surface inclinée inférieure du corps de poignée supérieur (40), apte à recevoir lesdites ailettes (36), de sorte que le corps de poignée supérieur (40) reste fixé au corps de poignée inférieur (30) tout en pouvant coulisser entre lesdites surfaces inclinées.

4. Robinet selon la revendication 2 ou 3, **caractérisé en ce que** ledit corps de poignée supérieur (40) est constitué de deux composants spéculaires (41) avec des surfaces de contact planes opposées, dans chacune desquelles est formé un rail de guidage (46), apte à recevoir de manière coulissante une extrémité respective d'une goupille (60), qui passe dans un orifice (26) prévu à l'extrémité du levier (22) de la cartouche (20) pour lier ledit levier au mouvement du corps de poignée supérieur (40).

5. Robinet selon la revendication 4, **caractérisé en ce qu'**autour desdits rails de guidage (46) pour ladite goupille (60) sont prévus des gabarits en bas-relief (47) respectifs, qui logent l'épaisseur du levier (22) et permettent son mouvement oscillatoire autour de son axe de pivotement (27) lors de l'actionnement de la poignée pour ouvrir et fermer le débit d'eau.

6. Robinet selon l'une quelconque des revendications 3 à 5, **caractérisé en ce que** sur le corps de poignée inférieur (30) est disposé un couvercle (50) qui en reproduit la forme et présente une surface supérieure inclinée (51), sur laquelle coulisse le corps de poignée supérieur (40), sur ladite surface inclinée (51) étant prévue une ouverture (52) pour le passage desdites ailettes (36).

7. Robinet selon la revendication 6, **caractérisé en ce qu'**à l'intérieur de la paroi latérale du couvercle (50) est prévu au moins une projection (53) conçue pour s'insérer dans une fente verticale (38) prévue dans le corps de poignée inférieur (30) pour contraindre le couvercle (50) en rotation.

8. Robinet selon l'une quelconque des revendications 4 à 7, **caractérisé en ce que** sur le corps de poignée supérieur (40) est disposée une coque d'alignement (70), à l'intérieur de la paroi de fond de laquelle est prévue une nervure profilée (71) destinée à s'engager dans des rainures (62) correspondantes prévues sur la surface supérieure des deux composants (41).

9. Robinet selon la revendication 8, **caractérisé en ce qu'**un couvercle esthétique (80) est appliqué sur ladite coque (70).

10. Robinet selon l'une quelconque des revendications 6 à 9, **caractérisé en ce qu'**une bague anti-friction (61) est intégrée sur le bord inférieur desdits composants (41) du corps de poignée supérieur (40), permettant un coulissement fluide sur ledit couvercle (50).
